# EUROPÄISCHE PATENTSCHRIFT

(11) **EP 3 341 648 B1**
(45) Veröffentlichungstag und Bekanntmachung des Hinweises auf die Patenterteilung: **14.08.2019**
(21) Anmeldenummer: 16763223.1
(22) Anmeldetag: 29.08.2016
(51) Int. Cl.: F21V 5/00, F21V 7/00, G02B 19/00, F21Y 115/10, F21Y 103/10

(54) **OPTISCHES ELEMENT**
OPTICAL ELEMENT
ÉLÉMENT OPTIQUE

(30) Priorität: 28.08.2015 DE 102015114310
(43) Veröffentlichungstag der Anmeldung: 04.07.2018
(73) Patentinhaber: ITZ Innovations- und Technologiezentrum GmbH, 59759 Arnsberg (DE)
(72) Erfinder: LEWERS, Christoph, 59757 Arnsberg (DE)
(74) Vertreter: Lippert Stachow Patentanwälte Rechtsanwälte
(86) Internationale Anmeldenummer: PCT/EP2016/070331
(87) Internationale Veröffentlichungsnummer: WO 2017/037028

(56) Entgegenhaltungen:
- WO-A1-2012/168822
- DE-A1-102007 013 082
- DE-A1-102013 226 181
- DE-A1-102014 202 461
- US-A- 5 197 792
- US-A1- 2013 003 363
- US-A1- 2015 055 371

## Beschreibung

Die Erfindung betrifft ein optisches Element zur Lenkung von durch längs einer Reihe angeordneten Leuchtmittel ausgestrahlten Licht nach dem Oberbegriff von Anspruch 1 sowie eine Leuchtenbaugruppe umfassend längs einer Reihe angeordnete Leuchtmittel sowie ein solches optisches Element.

Ein bekanntes optisches Element, insbesondere zum Betrieb mit punktförmigen Leuchtmitteln wie LEDs, weist eine den Leuchtmitteln zugewandte Rückseite und eine den Leuchtmitteln abgewandte Vorderseite auf sowie eine Ausnehmung an der Rückseite, welche durch Längsseitenabschnitte, Zwischenwandabschnitte und einen Bodenabschnitt begrenzt ist und ausgebildet ist zur Aufnahme eines Leuchtmittels und/oder zur Bereitstellung eines Lichteintrittsbereichs in welchem Licht eines Leuchtmittels in das optische Element eintritt. Ferner ist ein erster Umlenkbereich an der Rückseite des optischen Elements umfasst mit zumindest einer Umlenkfläche zur Ablenkung von Licht in Richtung auf eine an der Vorderseite des optischen Elements angeordneten Absenkung, die insbesondere V-förmig ausgebildet sein kann. Darüber hinaus weist das herkömmliche optische Element einen zweiten, insbesondere abgestuften Umlenkbereich an seiner Rückseite auf zur Bereitstellung einer Mehrzahl von beabstandeten Umlenkflächen zur Ablenkung von Licht in Richtung auf eine Lichtaustrittsfläche an der Vorderseite des optischen Elements, wobei von einer Begrenzungsfläche der an der Vorderseite des optischen Elements angeordneten Einsenkung Licht auf den zweiten Umlenkbereich an der Rückseite des optischen Elements abgelenkt wird.

Ein gattungsgemäßes optisches Element zur Lenkung von, durch eine längs einer Reihe angeordnete Leuchtmittel wie LEDs ausgestrahltem Licht ist in der Offenlegungsschrift DE 10 2014 202 461 A1 beschrieben. Das amerikanische Patent US 5,197,792 betrifft eine Vorrichtung zum Bereitstellen einer großflächigen, gleichmäßigen Beleuchtung von Anzeigetafeln, umfassend ein lichtleitendes, optisches Element mit einem Lichtempfänger zum Empfangen von Licht einer Lichtquelle und zum Reflektieren des Lichtes innerhalb des lichtleitenden Elementes in mindestens einer Richtung parallel zu einer ersten Achse und parallel zu der Ebene des lichtleitenden Elementes. Eine Mehrzahl von ersten Reflektoren reflektiert einen ersten Teil des Lichtes aus einer ersten Richtung zu einer Austrittsrichtung orthogonal zu der Ebene des Lichtleitelements und reflektieren einen zweiten Teil des Lichtes aus der ersten Richtung in einer zweite Richtung parallel zu der Ebene des Lichtleitelements und parallel zu einer zweiten Achse, die senkrecht zu der ersten Achse liegt. Eine Mehrzahl von zweiten Lichtreflektoren reflektiert das Licht aus der zweiten Richtung in die Austrittsrichtung. Die Offenlegungsschrift DE 10 2007 013 082 A1 betrifft eine Signalleuchte für Kraftfahrzeuge mit einer Reihe von Lichtquellen, denen jeweils eine Optikeinheit vorgelagert ist zur Ausleuchtung einer vorgegebenen Abstrahlfläche. Dabei ist die Optikeinheit als flügelförmiges Lichtleitelement ausgebildet, das an einer Rückseite eine einer Lichtquelle zugeordnete Lichteinkoppelfläche und an einer Vorderseite eine langgestreckte Lichtauskoppelfläche aufweist, wobei die Lichtauskoppelfläche in einem in Hauptstrahlrichtung vor der Lichtquelle angeordneten Bereich einen Lichtumlenkabschnitt aufweist zur Umlenkung des eingekoppelten Lichtes in Richtung der Rückseite des Lichtleitelements und das an der Rückseite einen langgestreckten Reflexionsabschnitt mit einer Mehrzahl von Reflexionselementen aufweist zur Umlenkung des eingekoppelten Lichtes in Hauptabstrahlrichtung. Die Offenlegungsschrift DE 10 2013 226 181 A1 betrifft ein optisches Element zur Beeinflussung eines von einer Lichtquelle abgestrahlten Lichtes mit einer zur Lichtquelle abgewandten Vorderseite und einer zur Lichtquelle zugewandten Rückseite, wobei an der Rückseite ein Lichteintrittsbereich zum Eintritt des Lichtes und ein umlenkender Flächenbereich ausgebildet ist und an der Vorderseite ein vorderseitiger Flächenbereich, wobei die Gestaltung derart ist, dass erste Lichtstrahlen, die über den Lichteintrittsbereich in das optische Element eintreten, an dem umlenkenden Flächenbereich totalreflektiert werden und im weiteren über den vorderseitigen Flächenbereich das optische Element verlassen. Der vorderseitige Flächenbereich ist derart ausgebildet, dass zweite Lichtstrahlen des Lichts, die über den Lichteintrittsbereich in das optische Element eintreten und anschließend unmittelbar auf den vorderseitigen Flächenbereich auftreffen, dort eine Totalreflexion erfahren.

Durch ein gattungsgemäßes optisches Element kann ein großer Teil des von den Leuchtmitteln emittierten Lichts aus dem Zentralbereich, in welchem die Leuchtmittel angeordnet sind, umgelenkt werden, so dass eine verminderte Blendwirkung auftritt und vorgegebene Lichtverteilungen einfacherer realisierbar sind. Die Lichtverteilung bei Leuchten unter Verwendung eines gattungsgemäßen optischen Elements ist jedoch nicht ideal, unter Umständen sind für einen Betrachter streifige Strukturen oder Farbsäume erkennbar, die den Beleuchtungseindruck stören.

Der Erfindung liegt die Aufgabe zugrunde, die beschriebenen Nachteile herkömmlicher optischer Elemente zumindest teilweise zu beheben. Diese Aufgabe löst die Erfindung mit einem optischen Element mit den Merkmalen von Anspruch 1.

Das erfindungsgemäße optische Element zeichnet sich dadurch aus, dass Zwischenwandabschnitte der an der Rückseite des optischen Elements angeordneten Ausnehmungen auf der zum Inneren der jeweiligen Ausnehmung abgewandten Seite jeweils zumindest eine Umlenkfläche aufweisen zur Umlenkung des in Längsrichtung abgestrahlten Lichts in den ersten Umlenkbereich an der Rückseite des optischen Elements. Zur Gestaltung der Zwischenwandabschnitte, welche in Längsrichtung abgestrahltes Licht in den ersten Umlenkbereich ablenken, ist erfindungsgemäß vorgesehen, dass in eine Zwischenwand zwischen zwei Ausnehmungen, die jeweils zur Aufnahme eines Leuchtmittels und/oder zur Bereitstellung eines Lichteintrittsbereichs ausgebildet sind, eine insbesondere rautenartige Ausnehmung ausgebildet ist. Eine solche Gestaltung des optischen Elementes kann insbesondere zweckmäßig sein, wenn das Element symmetrisch zu einer Ebene aufgebaut ist, welche die Längsachse der Reihenanordnung der Leuchtmittel umfasst, sodass das in Längsrichtung abgestrahlte Licht eines Leuchtmittels dann in beide ersten und zweite Umlenkbereiche zur Gleichmäßigkeit der Lichtverteilung umgelenkt wird. Zweckmäßigerweise kann deren Innenfläche eine als Totalreflexionsfläche wirkende Umlenkfläche zur Umlenkung des in Längsrichtung abgestrahlten Lichts auf den ersten Umlenkbereich bereitstellen, von welchem das Licht zumindest teilweise in den zweiten Umlenkbereich abgelenkt wird.

Durch die beschriebene konstruktive Maßnahme erreicht die Erfindung, dass auch das etwa bzw. mit einer Komponente in Längsrichtung der geometrischen Reihenanordnung der Leuchtmittel emittierte Licht zur Erzielung einer höheren Gleichmäßigkeit der Lichtabstrahlung zur Verfügung steht, da dieser Lichtanteil vom ersten Umlenkbereich auf den zweiten Umlenkbereich abgelenkt wird, so dass dieses Licht an der Lichtaustrittsfläche zur Verfügung steht zur Vermeidung von unbeabsichtigten Ungleichmäßigkeiten in der Lichtverteilung sowie von Farbsäumen. Die Zwischenwandabschnitte können im Wesentlichen senkrecht zur Längsachse bzw. den Längswandabschnitten des optischen Elementes verlaufen.

Die durch die Zwischenwandabschnitte bereitgestellte Umlenkfläche kann insbesondere als Totalreflexionsfläche ausgebildet sein.

Weitere erfindungsgemäße Merkmale sind in der allgemeinen Beschreibung, der Figurenbeschreibung, den Zeichnungen sowie den Unteransprüchen angegeben.

Zweckmäßigerweise kann das erfindungsgemäße optische Element einstückig ausgebildet sein.

Zweckmäßigerweise kann zur gerichteten Lenkung der von den Leuchtmitteln ausgehenden Lichtstrahlen vorgesehen sein, dass die Zwischenwandabschnitte und/oder der Bodenabschnitt der Ausnehmung auf der zum Leuchtmittel hingewandten Seite eine konvexe Oberfläche aufweisen. Diese Wandabschnitte können jedoch auch eben ausgeführt sein.

Zweckmäßigerweise kann der erste Umlenkbereich an der Rückseite des optischen Elements durch zumindest zwei lateral beabstandete und parallel verlaufende Wandabschnitte bereitgestellt sein, die jeweils auf der zur Längsachse abgewandten Seite Ablenkungsflächen aufweisen können, die das von den Leuchtmitteln lateral ausgesendete Licht auf die Begrenzungsfläche der Einsenkung an der Vorderseite des optischen Elements umlenken. Dabei kann vorgesehen sein, dass sich die Umlenkfläche des lateral außenliegenden Wandabschnitts in vertikaler Richtung weiter in vertikaler Richtung erstreckt als die Umlenkfläche des lateral innenliegenden Wandabschnitts, wodurch eine kompakte Bauweise des erfindungsgemäßen optischen Elements, insbesondere in Bezug auf die Erstreckung in vertikaler Richtung bereitgestellt werden kann.

Die optisch wirksamen Umlenkflächen der zumindest zwei Wandabschnitte des ersten Umlenkbereichs können auch unterschiedliche Neigungen aufweisen, ferner sie können eben oder auch gekrümmt ausgebildet sein. Zweckmäßigerweise reichen die freien Enden der Wandabschnitte des ersten Umlenkbereichs vertikal bis etwa zur der vertikalen Erstreckung von Wandabschnitte des Lichteintrittsbereichs.

Zweckmäßigerweise kann der zweite, abgestufte Umlenkbereich eine Mehrzahl von lateral zur Längsachse des optischen Elementes aufeinanderfolgenden Seitenflächen aufweisen, welche jeweils durch eine totalreflektierende Stufenfläche abgestuft sind. Diese Stufenflächen können die auffallenden Lichtstrahlen in Richtung auf den Lichtaustrittsbereich an der Vorderseite des optischen Elements ablenken, wo sie das optische Element verlassen können. Je nach spezifischer Ausführungsform können die Stufenflächen eben, in Bezug auf ihre Längserstreckung gekrümmt oder wellenartig, in Bezug auf die Stufenhöhe gekrümmt oder wellenartig ausgebildet sein um Inhomogenitäten in einer vorgegebenen Lichtverteilung zu vermeiden und/oder eine vorgegebene Lichtverteilung zu erzeugen.

Die Gleichförmigkeit in einer vorgegebenen Lichtverteilung kann weiter dadurch erhöht werden, dass an und/oder in Seitenflächen bzw. Stufenflächen innerhalb des zweiten, abgestuften Umlenkbereichs jeweils eine Mehrzahl von in Längsrichtung beabstandeten optischen Umlenkelementen angeordnet sind, welche Licht auf die Lichtaustrittsfläche an der Vorderseite des optischen Elements, insbesondere mittels Totalreflexion, umlenken. Derartige Umlenkelemente können beispielsweise als prismenartige, insbesondere keilartige Ausnehmungen an den Seitenflächen bzw. Stufenflächen ausgebildet sein.

Um Licht auch in größere lateral von der Längsachse beabstandeten Bereiche des erfindungsgemäßen optischen Elementes zu führen und dort auszukoppeln, kann zweckmäßigerweise vorgesehen sein, dass die laterale Dichte der optischen Umlenkelemente an/oder in den Seitenflächen mit steigendem lateralen Abstand zu der Ausnehmung zur Bereitstellung eines Lichteintrittsbereichs zunimmt.

Die beschriebenen Umlenkelemente im Bereich der Seitenflächen bzw. Stufenflächen des zweiten, abgestuften Umlenkbereichs können in besonderer Weise aufeinander abgestimmt sein, derart, dass definiert vorgegebene Lichtstrahlen insbesondere in Längsrichtungen abgelenkt werden bevor sie über ein weiteres Umlenkelement dann in Richtung auf die Lichtaustrittsfläche an der Vorderseite des optischen Elements umgelenkt werden. Auf diese Weise ermöglicht das erfindungsgemäße optische Element eine Homogenisierung des abgestrahlten Lichts auch in Längsrichtung, so dass insbesondere bei punktförmigen Lichtquellen wie LEDs für den Betrachter eine einzelne LED nicht mehr auflösbar ist.

Zweckmäßigerweise kann vorgesehen sein, dass Seitenflächen im Bereich einer Scheitellinie zwischen einer jeweiligen Stufenfläche und der angrenzenden Seitenfläche eine lateral verlaufende, insbesondere keilförmige Ausnehmung aufweisen zur Bereitstellung einer Umlenkfläche zur Umlenkung des auftreffenden Lichts in Längsrichtung. Dabei können die Begrenzungsflächen der Ausnehmung so gestaltet sein, dass das Licht in Längsrichtung totalreflektiert wird. Die Ausnehmungstiefe kann sich über einen Teil oder die gesamte laterale Ausdehnung der jeweiligen Seitenfläche erstrecken.

Um das in Längsrichtung umgelenkte Licht in Richtung zur Lichtaustrittsfläche an der Vorderseite des optischen Elements umzulenken, kann zweckmäßigerweise vorgesehen sein, zu der lateral verlaufenden Ausnehmung einer Seitenfläche eine in Längsrichtung beabstandete, vertikal verlaufende und insbesondere keilförmig ausgebildete Ausnehmung vorzusehen zur Bereitstellung einer Umlenkfläche, welche auftreffendes Licht zur Vorderseite des optischen Elements umlenkt.

Das erfindungsgemäße optische Element kann bezüglich seiner Umlenkbereiche so ausgebildet sein, dass das über die Längsseitenwandabschnitte des Lichteintrittsbereich in das optische Element eintretende Licht überwiegend, insbesondere vollständig, vom ersten Umlenkbereich auf die Begrenzungsfläche der an der Vorderseite des optischen Elements angeordnete Einsenkung abgelenkt wird, vom welchem wiederum eine Umlenkung in den zweiten, insbesondere abgestuften Umlenkbereich an der Rückseite des optischen Elements erfolgt.

Es kann im Rahmen der erfindungsgemäßen Gestaltung des optischen Elements vorgesehen sein, dass das über einen Bodenabschnitt der Ausnehmung in das optische Element eintretende Licht größtenteils, insbesondere vollständig auf die Begrenzungsfläche der Einsenkung an der Vorderseite fällt und von dort in einem wesentlichen Umfang, insbesondere vollständig, in den zweiten Umlenkbereich abgelenkt wird.

Um das im Bereich der Begrenzungsfläche der Einsenkung an der Vorderseite des optischen Elements ausgekoppelte Licht anteilsmäßig zu erhöhen, kann vorgesehen sein, an bzw. in der Begrenzungsfläche entsprechende Auskoppelstrukturen vorzusehen, beispielsweise Nuten und/oder Erhebungen.

Die Erfindung betrifft ferner eine Leuchtenbaugruppe mit einer Mehrzahl von geometrisch längs in Reihe angeordneten Leuchtmitteln wie LEDs sowie einem obenstehend beschriebenen erfindungsgemäßen optischen Element.

Die Erfindung wird im Folgenden durch das Beschreiben einiger Ausführungsformen unter Bezugnahme der beiliegenden Figuren erläutert, wobei
- Figur 1: ein erfindungsgemäß gestaltetes optisches Element in einer perspektivischen Aufsicht,
- Figur 2: das optische Element der Figur 1 in einer Schnittdarstellung senkrecht zur Längsachse,
- Figur 3: eine Schnittdarstellung entsprechend der Figur 2 in einer perspektivischen Seitenansicht,
- Figur 4: einen vergrößerten Ausschnitt einer perspektivischen Aufsicht ähnlich der Darstellung der Figur 3 und
- Figur 5: einen Ausschnitt ähnlich der Figur 4 als reine Aufsicht
zeigt.

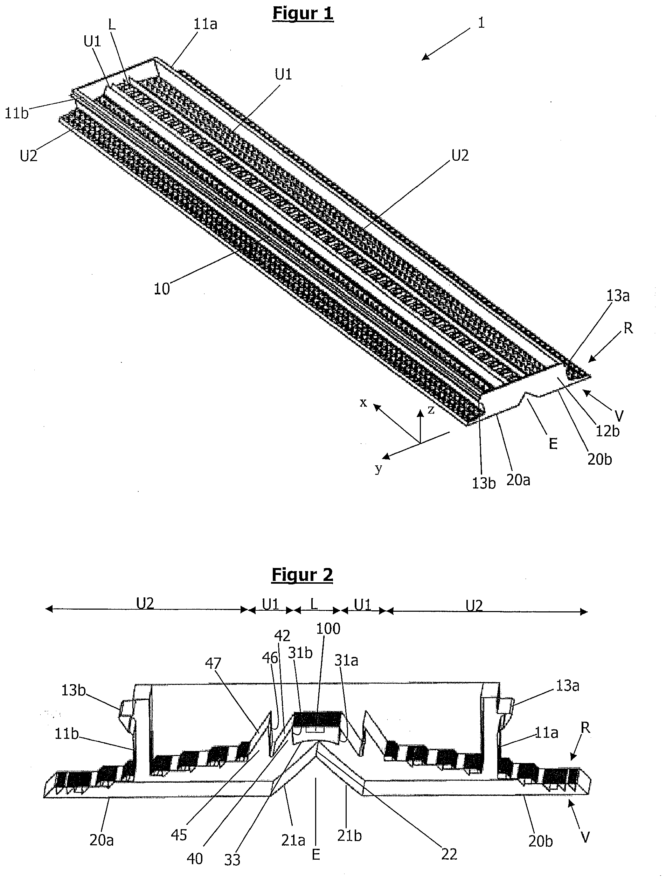

Das in Figur 1 dargestellte erfindungsgemäße optische Element ist als einteiliges Optikmodul 1 ausgebildet zur Lichtführung an einer Leuchte, bei welcher längs einer Reihe, d.h. geometrisch in einer Reihe angeordnete Leuchtmittel wie LEDs Licht emittieren, das durch das Optikmodul 1 zur Gestaltung einer vorgegebenen Lichtverteilungskurve gelenkt wird. Dabei kann vorgesehen sein, mehrere dieser Optikmodule 1 in Reihe anzuordnen, so um ein beliebig langes Leuchtband, beispielsweise an einer Decke oder Wand zu gestalten. Zur Befestigung an der Leuchte weist das Optikmodul 1 einen umfänglich geschlossenen Rahmen 10 auf, der Längswandungen 11a, 11b und Stirnwandungen 12a, 12b umfasst, wobei diese Wandungen sich an der Rückseite R des Elements in Einbaulage zum Leuchtengehäuse hin erstrecken. Zur Befestigung am Leuchtengehäuse weist der Rahmen 10 an den Längswandungen 11a, 11b jeweils ein nach außen ragendes Rastelement 13a, 13b auf, die zur Verrastung mit komplementären Mitteln am Leuchtengehäuse bzw. -rahmen dienen. Das erfindungsgemäße Optikmodul kann auch für eine Wandleuchteneinrichtung verwendet werden.

In der beschriebenen Ausführungsform ist das Optikmodul 1 symmetrisch zu einer Ebene (in Figur 1 symmetrisch zur XZ-Ebene), wobei die X-Achse die Längsachse festlegt, auf welcher das Modul Ausnehmungen an der Rückseite R zur Gestaltung des Lichteintrittsbereichs L aufweist. Dabei können die Ausnehmungen entsprechend der Anordnung der LEDs geometrisch in Reihe angeordnet sein. In der beschriebenen Ausführungsform des Moduls ist jede dieser Ausnehmungen zur Aufnahme einer einzelnen LED ausgebildet. Es liegt jedoch auch im Rahmen der Erfindung, ein optisches Element zu gestalten, bei welchem in jeder Ausnehmung mehrere, beispielsweise zwei LEDs angeordnet sind. In der Regel sind dabei die LEDs auf einem LED-Träger platziert und ragen nach dem Zusammensetzen der Bauteile der Leuchte bzw. des Leuchtbandes zumindest abschnittsweise in die jeweils zugeordnete Ausnehmung.

Das im Lichteintrittsbereich L auf der Rückseite R des Optikmoduls 1 aufgenommene Licht wird in noch zu beschreibender Weise durch die lateral zum Lichteintrittsbereich L angeordneten ersten Umlenkbereiche U1 zunächst in Richtung auf die Einsenkung E an der Vorderseite V des Optikmoduls 1 umgelenkt und von deren Begrenzungsfläche wiederum abgelenkt in lateraler Richtung zu den zweiten Umlenkbereichen U2 an der Rückseite R des Optikmoduls 1. Diese zweiten Umlenkbereiche U2 weisen Mittel auf um das Licht dann wiederum umzulenken in Richtung auf die Lichtaustrittsfläche 20a, b, an welcher der bei weitem größte Teil des Lichtes das Optikmodul 1 verlässt.

Figur 2 zeigt einen Schnitt durch das Optikmodul 1 der Figur 1 etwa senkrecht zur Längsachse. Der Lichteintrittsbereich L umfasst Ausnehmungen, welche jeweils durch Längsseitenflächen 31a, 31b Zwischenwandflächen 32a, 32b sowie die Bodenfläche 33 festgelegt ist. Erkennbar ist in der beschriebenen Ausführungsform die Bodenfläche 33 zur Kollimation der von der LED 100 ausgehenden Lichtstrahlen konvex gekrümmt.

Die Einsenkung E an der Vorderseite V des Optikmoduls 1 wird in der beschriebenen Ausführungsform durch zwei geneigte ebene Flächen 21a, 21b, die hier einen Winkel von etwa 45° zur xz-Ebene bilden und sich in der Scheitellinie 22 schneiden, welche in der Symmetrieebene XZ des Optikmoduls 1 liegt. Das Optikmodul 1 ist so gestaltet, dass bei der Verwendung herkömmlicher LEDs, welche einen Strahlwinkelbereich von etwa 120° aufweisen, der überwiegende Teil, insbesondere alle der Lichtstrahlen, die durch die Bodenfläche 33 in das Optikmodul 1 eintreten, auf die geneigten Flächen 21a, 21b auftreffen wo sie zum überwiegenden Teil über Totalreflexion in die lateralen Bereiche U2 umgelenkt werden.

Dagegen treffen Lichtstrahlen, die unter einem größeren Abstrahlwinkel von der LED 100 ausgesendet werden, teilweise auf die Längsseitenflächen 31a, 31b, an die sich lateral die ersten Umlenkbereiche U1 anschließen. Dieser Bereich wird in der beschriebenen Ausführungsform durch zwei lateral beabstandete Längswandungen 40, 45 gebildet, die parallel zur Scheitellinie 22 verlaufen und jeweils durch eine lateral innenliegende Grenzfläche 46 bzw. 31b und durch jeweils eine lateral außenliegende Grenzfläche 47, 42 festgelegt sind, wobei die außenliegenden Grenzflächen 47, 42 in der beschriebenen Ausführungsform als über Totalreflexion wirkende Umlenkflächen ausgebildet sind.

Lichtstrahlen, welche über die Längsseitenflächen 31a, 31b in die erste Längswand 40 eintreten, werden an der lateral außenliegenden Fläche 42 in Richtung auf die Begrenzungsfläche 21a, 21b der Einsenkung E hingelenkt, wo sie wiederum mehrheitlich in die lateral liegenden Abschnitte des Optikmoduls 1 abgelenkt werden. Der geringe Anteil des Lichtes, welcher an der Umlenkfläche 42 nicht totalreflektiert wird, sondern aus der Wandung 40 austritt, tritt über die lateral innenliegende Grenzfläche 46 der Längswand 45 wieder in das Material ein. Das Licht wird dann an der lateral außenliegenden Grenzfläche 47, die aufgrund vorgewählter Neigung wiederum als totalreflektierende Umlenkfläche arbeitet, auf die Begrenzungsflächen 21a, 21b an der Vorderseite V des Optikmoduls 1 abgelenkt, wo sie wiederum in Richtung der lateralen Abschnitte des Optikmoduls 1 gerichtet wird.

In der beschriebenen Ausführungsform ist die Scheitellinie 22 vertikal, d.h. in Z-Richtung, etwa auf der Fußhöhe der Umlenkflächen 42, 47 angeordnet, so dass auch das lateral abgestrahlte Licht in die lateralen Umlenkbereiche U2 umgelenkt werden kann.

Die zweiten Umlenkbereiche U2 an der Rückseite R des Optikmoduls 1 zeichnen sich durch eine in der Schnittdarstellung der Figur 2 erkennbare terrassenförmige Gestaltung auf mit einer Mehrzahl von Seitenflächen, welche jeweils durch eine insbesondere totalreflektierende Stufenfläche abgestuft sind. Sowohl die Seitenflächen als auch die Stufenflächen sind in der beschriebenen Ausführungsform grundsätzlich eben gestaltet. Die Scheitellinien der Abstufungen verlaufen in der dargestellten Ausführungsform parallel zur Längsachse (X-Achse, siehe Figur 1), in anderen Ausführungsformen kann jedoch auch vorgesehen sein, dass die Scheitellinie in zur Längsrichtung gekrümmt oder wellenartig gestaltet ist. Ferner kann vorgesehen sein, dass die Steigung der Stufenfläche variiert in Längsrichtung bzw. in lateraler Richtung, darüber hinaus können die genauen Gestaltungen wie laterale Breite oder Höhe (Erstreckung in z-Richtung, s. Fig. 1) der einzelnen Terrassen variieren.

In der beschriebenen Ausführungsform wird der überwiegende Anteil des in die lateralen Bereiche des Optikmoduls 1 reflektierten Lichtes an den Stufenflächen reflektiert, insbesondere totalreflektiert, in Richtung auf die Lichtaustrittsflächen 20a, 20b, so dass über die gesamte laterale Ausdehnung des Optikmoduls 1 Licht austritt. Diese Flächen 20a, b sind hier eben gestaltet und liegen in der gleichen Ebene. In einer nicht dargestellten Ausführungsform können diese auch gekrümmt sein und/oder einen Winkel zueinander aufweisen.

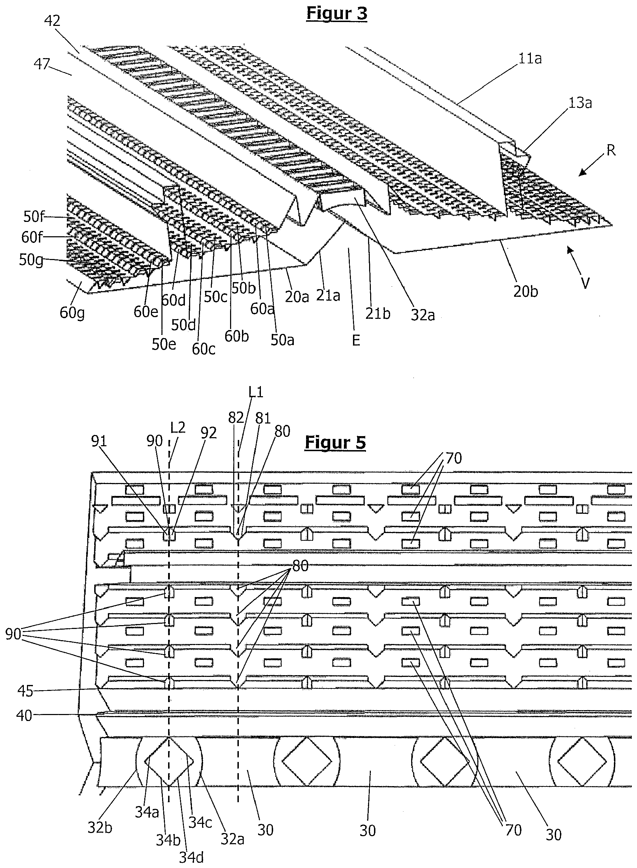

Figur 3 zeigt einen ähnlichen Schnitt wie Figur 2, jedoch in einer perspektivischen Ansicht, aus welcher insbesondere hervorgeht, dass im zweiten Umlenkbereich U2 an der Rückseite R des Optikmoduls 1 die Seitenflächen 50a-g und die zugehörigen Stufenflächen 60a-g jeweils in Längsrichtung beider lateraler Abschnitte U2 symmetrisch aufgebaut sind. Aus diesem Grund sind die diesbezüglichen Flächen allein in der Figur 3 auf der rechten Seite mit Bezugszeichen versehen.

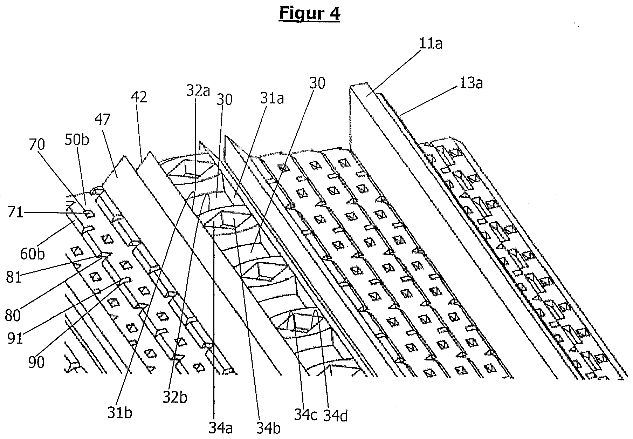

Einen detaillierteren Ausschnitt zeigt in einer perspektivischen Aufsicht auf die Rückseite R des erfindungsgemäßen Optikmoduls 1 die Figur 4. Zunächst sei auf den spezifischen Aufbau des Lichteintrittsbereichs und der Zwischenwandbereiche zwischen den Ausnehmungen 30 eingegangen. Diese Ausnehmungen 30, welche in der beschriebenen Ausführungsform des erfindungsgemäß ausgebildeten Optikmoduls 1 jeweils eine LED 100 abschnittsweise aufnehmen, werden jeweils durch die hier ebenen Längenseitenflächen 31a, 31b und die gekrümmten, kollimierenden Zwischenwandflächen 32a, 32b gebildet.

Der Strahlenverlauf beim Eintreten des Lichtes in die Bodenfläche 33 bzw. die Seitenflächen 31a, 31b wurden obenstehend mit Bezug auf Figur 2 erläutert. Darüber hinaus strahlt die LED auch in einen Winkelbereich um die Längsachse (X-Achse, siehe Figur 1), so dass dann die Zwischenwandabschnitte, welche durch die Zwischenwandflächen 32a, 32b begrenzt sind, eine spezifische Strahlführung bereitstellen. Diese ist derart, dass das in Längsrichtung bzw. in einen vorgegebenen Winkelbereich um die Längsachse herum abgestrahlte Licht zunächst durch die Zwischenwandflächen 32a, 32b kolliminiert wird, darüber in die Wandung eintritt und an Außenflächen 34a, 34b bzw. 34c, 34d in Richtung des ersten Umlenkbereichs an der Rückseite R des Lichtmoduls 1 umgelenkt wird. In der beschriebenen Ausführungsform wird durch die Umlenkflächen 34a-d in jedem Zwischenwandabschnitt eine rautenförmige Ausnehmung gebildet. Der Winkel zwischen den sich schneidenden Zwischenwand-Umlenkflächen 34a, 34b bzw. 34c, 34d kann je nach Ausführungsform im Bereich von etwa 35 bis 55° liegen. Es ist anzustreben, dass sich diese Zwischenwand-Umlenkflächen schneiden damit über die gesamte laterale Erstreckung des Lichteintrittsbereichs L das in Längsrichtung emittierte Licht in Querrichtung abgelenkt wird.

Aus Figur 4 geht darüber hinaus auch im Detail hervor, dass die Seitenflächen 50a-g bzw. Stufenflächen 60a-g in spezifischer Weise strukturiert sind um in definierter Art Licht zu führen und umzulenken, um zum Einen eine vorgegebene Lichtverteilungskurve bereitzustellen und zum anderen innerhalb dieser Lichtverteilungskurve eine hohe Gleichmäßigkeit des Lichtes einzustellen. Beispielsweise sind in der beschriebenen Ausführungsform etwa mittig in der lateralen Erstreckung der Seitenflächen 50a-g Umlenkelemente 70 in Form von prismenartigen Ausnehmungen an den Seitenflächen vorgesehen. Diese Umlenkelemente 70 stellen eine schräg verlaufende Umlenkfläche 71 bereit, an welcher lateral im Material transmittierende und auf die Fläche 71 auftreffende Lichtstrahlen vertikal nach unten auf die Lichtaustrittsfläche 20a, 20b reflektiert, insbesondere totalreflektiert werden. Hierzu kann die Umlenkfläche 71 einen Winkel von etwa 45° zur XY-Ebene bilden und parallel zur x-Achse verlaufen, siehe Figur 1.

Darüber hinaus umfasst das erfindungsgemäße Optikmodul 1 im zweiten Umlenkbereich U2 an der Rückseite R des Moduls Umlenkelemente 80, welche in Querrichtung, d.h. y-Richtung transmittierende Lichtstrahlen insbesondere über Totalreflexion in die positive oder negative Längsrichtung (x-Richtung) ablenken. In der beschriebenen Ausführungsform ist das Umlenkelement 80 als symmetrische Einkerbung in die Stufenflächen 60a-g ausgebildet, derartig, dass zwei Umlenkflächen 81, 82 entstehen, welche einen Winkel von etwa 45° zur YZ-Ebene aufweisen (siehe Figur 1) und etwa parallel zur Z-Achse verlaufen, so dass auf das Element 80 auftreffende Lichtstrahlen entweder in Plus- oder Minus-X-Richtung abgelenkt werden.

Zweckmäßigerweise sieht die erfindungsgemäße Gestaltung dann vor, das in Längsrichtung in der jeweiligen Terrasse geführte Licht an solchen Stellen in vertikaler Richtung auf die Lichtaustrittsflächen 20a, 20b umzulenken, an welchen aufgrund der geometrischen Anordnung der LEDs 100 im Lichteintrittsbereich L eine verminderte Leuchtdichte auftritt. Diese Umlenkelemente 90 sind in der beschriebenen Ausführungsform wie die Umlenkelemente 80 als keilförmige Ausnehmungen an den Seitenflächen ausgebildet, wobei die Begrenzungsflächen 91, 92 und damit die optisch wirksamen Reflexions-, insbesondere Totalreflexionsfläche,n einen Winkel von etwa 45° zu der XY-Ebene besitzen und parallel zur y-Achse verlaufen. Aus der Figur 4 ist ersichtlich, dass die Umlenkelemente 80 und 90 symmetrische Keilausnehmungen darstellen mit jeweils zwei optisch wirksamen Flächen, wobei in der Figur jeweils nur eine bezeichnet ist.

Figur 5 zeigt einen Ausschnitt einer Aufsicht auf die Rückseite der beschriebenen Ausführungsform eines Optikmoduls 1, aus welcher die geometrische Anordnung der Umlenkelemente 70, 80, 90 relativ zu den Lichteintrittsflächen sowie den Zwischenwandabschnitten hervorgeht. Diese sind wie beschrieben gerade so angeordnet, um in solchen Längsabschnitten, in welchen im Lichteintrittsbereich kein Licht eingekoppelt wird, Lichtstrahlen in definierter Weise hingeleitet und dort ausgekoppelt werden. Beispielsweise liegt der Längsabschnitt L1 etwa in der Mitte zu einer Ausnehmung 30, so dass hier in lateraler Richtung eine hohe Leuchtdichte vorliegt. Demgegenüber ist die Leuchtdichte im Längsbereich L2 vermindert, da dieser Bereich gerade mittig in einem Zwischenwandabschnitt liegt. Durch die beschriebene Gestaltung des erfindungsgemäßen optischen Elements wird gerade in diesem Bereich die Leuchtdichte erhöht was den Eindruck einer zusätzlichen "virtuellen Lichtquelle" verursacht.

Einerseits erfolgt durch die Umlenkflächen 34a-d im Lichteintrittsbereich zur Umlenkung des längs gerichteten Lichtes in Querrichtung eine Aufhellung, wobei das Licht wie erläutert über den ersten Umlenkbereich U1 auf die Umlenkflächen 21a, 21b an der Vorderseite des optischen Elementes 1 gelenkt wird, welche das Licht dann in den zweiten Umlenkbereich U2 richten, wo es an den Stufenflächen 60a-g bzw. den Umlenkelementen 70 in Richtung auf die Lichtaustrittsflächen 20a, 20b gerichtet wird.

Darüber hinaus wird der Längsbereich L2 über das beschriebene Zusammenwirken der Umlenkelemente 80 und 90 aufgehellt, so dass sich für den Betrachter einer Leuchte bzw. eines Leuchtbandes unter Verwendung des erfindungsgemäß ausgebildeten optischen Elements der Eindruck einer über die Längsachse durchgehenden Leuchtmittels ergibt.

### Bezugszeichenliste

- 1: optisches Element, Optikmodul
- 10: Rahmen
- 11a, 11b: Längswandung
- 12a, 12b: Stirnwandung
- 13a, 13b: Rastelement
- 20a, 20b: Lichtaustrittsfläche
- 21a, 21b: Begrenzungsfläche der Einsenkung E
- 22: Scheitellinie
- 30: Ausnehmung
- 31a, 31b: Längsseitenfläche
- 32a, 32b: Zwischenwandfläche
- 33: Bodenfläche
- 34a-d: Zwischenwand-Umlenkfläche
- 40: Längswand
- 41: Lateral innenliegende Grenzfläche
- 42: lateral außenliegende Grenzfläche/ Umlenkfläche
- 45: Längswand
- 46: Lateral innenliegende Grenzfläche
- 47: lateral außenliegende Grenzfläche/ Umlenkfläche
- 50a-g: Seitenfläche
- 60a-g: Stufenfläche
- 70: Umlenkelement
- 71: Umlenkfläche
- 80: Umlenkelement
- 81: Umlenkfläche
- 82: Umlenkfläche
- 90: Umlenkelement
- 91: Umlenkfläche
- 92: Umlenkfläche
- 100: LED
- E: Einsenkung
- L: Lichteintrittsbereich
- R: Rückseite
- U1: erster Umlenkbereich
- U2: zweiter Umlenkbereich
- V: Vorderseite

## Patentansprüche

1. Optisches Element (1) zur Lenkung von, durch eine längs einer Reihe angeordneten Leuchtmitteln wie LEDs (100) ausgestrahlten Lichtes
- mit einer den Leuchtmitteln zugewandten Rückseite (R) und einer den Leuchtmitteln abgewandten Vorderseite (V),
- mit Ausnehmungen (30) an der Rückseite (R), die jeweils begrenzt sind durch Längsseitenwandabschnitte, Zwischenwandabschnitte und einen Bodenabschnitt zur Aufnahme eines Leuchtmittels und/oder zur Bereitstellung eines Lichteintrittsbereichs (L) in welchem Licht in das optische Element eintritt,
- mit einem ersten Umlenkbereich (U1) an der Rückseite (R) mit zumindest einer Umlenkfläche zur Ablenkung von Licht in Richtung auf eine an der Vorderseite (V) des optischen Elementes angeordneten Einsenkung (E), insbesondere eine V-förmigen Einsenkung (E),
- mit einem zweiten, insbesondere abgestuften Umlenkbereich (U2) an der Rückseite (R) zur Bereitstellung einer Mehrzahl von beabstandeten Umlenkungsflächen zur Ablenkung von Licht in Richtung auf eine Lichtaustrittsfläche (20a, 20b) an der Vorderseite (V) des optischen Elementes, wobei von einer Begrenzungsfläche der, an der Vorderseite (V) des optischen Elementes angeordneten Einsenkung (E) Licht auf den zweiten Umlenkbereich (U2) an der Rückseite (R) des optischen Elementes abgelenkt wird, wobei ein Zwischenwandabschnitt einer Ausnehmung (30) auf der zur Ausnehmung abgewandten Seite jeweils zumindest eine insbesondere als Totalreflexionsfläche wirkende Umlenkfläche (34a-d) aufweist, **dadurch gekennzeichnet**, das s die zumindest eine insbesondere als Totalreflexionsfläche wirkende Umlenkfläche (34a-d) zur Umlenkung des in Längsrichtung abgestrahlten Lichtes in den ersten Umlenkbereich (U1) an der Rückseite (R) des optischen Elementes ausgebildet ist, wobei der Zwischenwandabschnitt eine rautenartige Ausnehmung zwischen benachbarten Lichteintrittsbereichen (L) aufweist.

2. Optisches Element nach Anspruch 1, **dadurch gekennzeichnet**, das s die Zwischenwandabschnitte und/oder der Bodenabschnitt der Ausnehmung (30) auf der zum Leuchtmittel hingewandten Seite jeweils eine konvexe Oberfläche aufweist.

3. Optisches Element nach Anspruch 1 oder 2, **dadurch gekennzeichnet, dass** der erste Umlenkbereich (U1) an der Rückseite (R) des optischen Elementes durch zumindest zwei, lateral benachbarte und parallel verlaufende Wandabschnitte bereitgestellt ist.

4. Optisches Element nach einem der Ansprüche 1 bis 3, **dadurch gekennzeichnet, dass** der zweite, abgestufte Umlenkbereich (U2) eine Mehrzahl von Seitenflächen (50a-g), welche jeweils durch eine totalreflektierende Stufenfläche (60a-g) abgestuft sind.

5. Optisches Element nach Anspruche 4, **dadurch gekennzeichnet**, das s an und/oder in Stufenflächen (60a-g) jeweils eine Mehrzahl von in Längsrichtung beabstandeten, optischen Umlenkelementen (80) angeordnet ist, welche Licht in Längsrichtung insbesondere über Totalreflexion umlenken.

6. Optisches Element nach Anspruche 4 oder 5, **dadurch gekennzeichnet**, das s an und/oder in Seitenflächen (50a-g) jeweils eine Mehrzahl von in Längsrichtung beabstandeten, optischen Umlenkelementen (70, 90) angeordnet ist, welche Licht auf die Lichtaustrittsfläche (20a, 20b) an der Vorderseite (V) des optischen Elementes insbesondere über Totalreflexion umlenken.

7. Optisches Element nach Anspruche 5 oder 6, **dadurch gekennzeichnet**, das s die laterale Dichte der optischen Umlenkelementen (70, 90) an und/oder in den Seitenflächen mit steigendem lateralen Abstand zum Lichteintrittsbereich (L) zunimmt.

8. Optisches Element nach einem der Ansprüche 4 bis 7, **dadurch gekennzeichnet**, das s eine Stufenfläche (60a-g) eine lateral verlaufende, insbesondere keilförmige Ausnehmung aufweist zur Bereitstellung einer Umlenkfläche (81, 82) zur Umlenkung des auftreffenden Lichtes in Längsrichtung.

9. Optisches Element nach Anspruch 8, **dadurch gekennzeichnet**, das s zu der lateral verlaufenden Ausnehmung der Stufenfläche (60a-g) an ihrer Seitenfläche eine in Längsrichtung beabstandete, vertikal verlaufende, insbesondere keilförmig ausgebildete, Ausnehmung vorgesehen ist zur Bereitstellung einer Umlenkfläche (91, 92, die auftreffendes Licht auf die Lichtaustrittsfläche (20a, 20b) an der Vorderseite (V) des optischen Elementes insbesondere über Totalreflexion umlenkt.

10. Optisches Element nach einem der Ansprüche 1 bis 9, **dadurch gekennzeichnet, dass** die Begrenzungsfläche (21a, 21b) der an der Vorderseite (V) angeordneten Einsenkung (E) eine Mehrzahl von optische Auskoppelstrukturen aufweist.

11. Leuchtenbaugruppe mit längs einer Reihe angeordneten Leuchtmitteln wie LEDs (100) sowie einem optischen Element nach einem der vorstehenden Ansprüche.

## Claims

1. Optical element (1) for directing light emitted by lighting means arranged in a row such as LED's (100)
- with a rear side (R) turned to the lighting means and a front side (V) facing away from the lighting means,
- with recesses (30) on the rear side (R) that are respectively limited by longitudinal side wall sections, intermediate wall sections and a bottom section for receiving a lighting means and/or for providing a light entry surface (L) in which light enters the optical element,
- with a first deflecting area (U1) on the rear side (R) with at last one deflecting surface for deflecting light in direction of a hollow (E) placed on the front side (V) of the optical element, in particular a V-shaped hollow (E),
- with a second, in particular stepped, deflecting area (U2) on the rear side (R) for providing a multitude of spaced deflecting surfaces for deflecting light in direction of a light exit surface (20a, 20b) on the front side (V) of the optical element, wherein light is deflected by a delimiting surface of the hollow (E) placed on the front side (V) of the optical element onto the second deflecting area (U2) on the rear side (R) of the optical element, wherein an intermediate wall section of a recess (30) has, on the side opposed to the recess, respectively at least one deflecting surface (34a-d) acting in particular as a total reflection surface, **characterized in that** the at least one deflecting surface (34a-d) acting in particular as a total reflection surface is designed for deflecting the light emitted in longitudinal direction into the first deflecting area (U1) on the rear side (R) of the optical element, wherein the intermediate wall section has a rhomboidal recess between adjacent light entry areas (L).

2. Optical element according to claim 1, **characterized in that** the intermediate wall sections and/or the bottom section of the recess (30) has a convex surface each on the side turned to the lighting means.

3. Optical element according to claim 1 or 2, **characterized in that** the first deflecting area (U1) is made available on the rear side (R) of the optical element by at least two laterally adjacent and parallel extending wall sections.

4. Optical element according to one of the claims 1 to 3, **characterized in that** the second stepped deflecting area (U2) has a multitude of side surfaces (50a-g) that are respectively stepped by a totally reflecting stepped surface (60a-g).

5. Optical element according to claim 4, **characterized in that** a multitude of optical deflecting elements (80), spaced in the longitudinal direction, that deflect light in the longitudinal direction, in particular by total reflection, is placed on and/or in stepped surfaces (60a-g).

6. Optical element according to claim 4 or 5, **characterized in that** a multitude of optical deflecting elements (70, 90), spaced in the longitudinal direction, that deflect light onto the light exit surface (20a, 20b) on the front side (V) of the optical element, in particular by total reflection, is placed on and/or in side surfaces (50a-g).

7. Optical element according to claim 5 or 6, **characterized in that** the lateral density of the optical deflecting elements (70, 90) increases on and/or in the side surfaces with increasing lateral distance to the light entry area (L).

8. Optical element according to one of the claims 4 to 7, **characterized in that** a stepped surface (60a-g) has a laterally extending, in particular wedge-shaped, recess for making available a deflecting surface (81, 82) for deflecting the incident light in longitudinal direction.

9. Optical element according to claim 8, **characterized in that** a vertically extending, in particular wedge-shaped, recess that is spaced in longitudinal direction is provided to the laterally extending recess of the stepped surface (60a-g) on its side surface for making available a deflecting surface (91, 92) that deflects incident light onto the light exit surface (20a, 20b) on the front side (V) of the optical element, in particular by total reflection.

10. Optical element according to one of the claims 1 to 9, **characterized in that** the delimiting surface (21a, 21b) of the hollow (E) placed on the front side (V) has a multitude of optical decoupling structures.

11. Luminaire assembly with lighting means arranged in a row such as LED's (100) as well as an optical element according to one of the preceding claims.

## Revendications

1. Elément optique (1) pour diriger de la lumière émise par des moyens d'éclairage placés le long d'une rangée comme des LED (100)
- avec une face arrière (R) tournée vers les moyens d'éclairage et une face avant (V) opposée aux moyens d'éclairage,
- avec des évidements (30) sur la face arrière (R) qui sont respectivement délimités par des sections de paroi de côté longitudinal, des sections de paroi intermédiaire et une section de fond pour recevoir un moyen d'éclairage et/ou pour mettre à disposition une zone d'entrée de la lumière (L) dans laquelle de la lumière entre dans l'élément optique,
- avec une première zone de renvoi (U1) sur la face arrière (R) avec au moins une surface de renvoi pour dévier de la lumière en direction d'un renfoncement (E) placé sur la face avant (V) de l'élément optique, en particulier un renfoncement en forme de V (E),
- avec une seconde zone de renvoi, en particulier une zone de renvoi étagée (U2), sur la face arrière (R) pour mettre à disposition une multitude de surfaces de renvoi espacées pour dévier de la lumière en direction d'une surface de sortie de la lumière (20a, 20b) sur la face avant (V) de l'élément optique, cependant que de la lumière est déviée par une surface de délimitation du renfoncement (E) placé sur la face avant (V) de l'élément optique sur la seconde zone de renvoi (U2) sur la face arrière (R) de l'élément optique, cependant qu'une section de paroi intermédiaire d'un évidement (30) sur le côté opposé à l'évidement présente respectivement au moins une surface de renvoi (34a-d) qui agit en particulier comme une surface de réflexion totale, **caractérisé en ce que** la au moins une surface de renvoi (34a-d) qui agit en particulier comme une surface de réflexion totale est configurée pour dévier la lumière émise dans le sens longitudinal dans la première zone de renvoi (U1) sur la face arrière (R) de l'élément optique, cependant que la section de paroi intermédiaire présente un évidement losangé entre des zones d'entrée de la lumière adjacentes (L1).

2. Elément optique selon la revendication 1, **caractérisé en ce que** les sections de paroi intermédiaire et/ou la section de fond de l'évidement (30) présente, sur le côté tourné vers le moyen d'éclairage, chacune une surface convexe.

3. Elément optique selon la revendication 1 ou 2, **caractérisé en ce que** la première zone de renvoi (U1) est mise à disposition sur la face arrière (R) de l'élément optique par au moins deux sections de paroi voisines latéralement et s'étendant parallèlement.

4. Elément optique selon l'une des revendications 1 à 3, **caractérisé en ce que** la seconde zone de renvoi étagée (U2) présente une multitude de surfaces latérales (50a-g) qui sont étagées respectivement par une surface étagée à réflexion totale (60a-g).

5. Elément optique selon la revendication 4, **caractérisé en ce qu'**une multitude d'éléments de renvoi optique (80) espacés dans le sens longitudinal, qui renvoient de la lumière dans le sens longitudinal, en particulier par réflexion totale, est placée sur et/ou dans des surfaces étagées (60a-g).

6. Elément optique selon la revendication 4 ou 5, **caractérisé en ce qu'**une multitude d'éléments de renvoi optiques (70, 90) espacés dans le sens longitudinal, qui renvoient de la lumière sur la surface de sortie de la lumière (20a, 20b) sur la face avant (V) de l'élément optique, en particulier par réflexion totale, est placée sur et/ou dans des surfaces latérales (50a-g).

7. Elément optique selon la revendication 5 ou 6, caractérisé en ce la densité latérale des éléments de renvoi optiques (70, 90) augmente sur et/ou dans les surfaces latérales lorsque l'espace latéral avec la zone d'entrée de la lumière (L) augmente.

8. Elément optique selon l'une des revendications 4 à 7, **caractérisé en ce qu'**une surface étagée (60a-g) présente un évidement qui s'étend latéralement, en particulier en forme de clavette, pour mettre à disposition une surface de renvoi (81, 82) pour le renvoi de la lumière incidente dans le sens longitudinal.

9. Elément optique selon la revendication 8, **caractérisé en ce qu'**il est prévu un évidement espacé dans le sens longitudinal, qui s'étend verticalement, en particulier qui est configuré en forme de clavette, par rapport à l'évidement qui s'étend latéralement de la surface étagée (60a-g) sur sa surface latérale pour mettre à disposition une surface de renvoi (91, 92) qui renvoie de la lumière incidente sur la surface de sortie de la lumière (20a, 20b) sur la face avant (V) de l'élément optique, en particulier par réflexion totale.

10. Elément optique selon l'une des revendications 1 à 9, **caractérisé en ce que** la surface de délimitation (21a, 21b) du renfoncement (E) placé sur la face avant (V) présente une multitude de structures de découplage optique.

11. Ensemble de luminaires avec des moyens d'éclairage placés le long d'une rangée comme des LED (100) ainsi qu'avec un élément optique selon l'une des revendications précédentes.
